# EUROPEAN PATENT APPLICATION

(11) **EP 1 124 140 A1**
(43) Date of publication of application: **16.08.2001**
(21) Application number: 00400338.0
(22) Date of filing: 08.02.2000
(51) Int. Cl.: G01S 5/12

(54) **Mobile telephone location system and method**

(71) Applicant: MOTOROLA, INC., Schaumburg, IL 60196 (US)
(72) Inventor: Merigeault, Sandrine, 75014 Paris (FR); Batarière, Michael, 91400 Orsay (FR); Patillon, Jean-Noel, 75013 Paris (FR)
(74) Representative: Kopacz, William James

(57) **Abstract**

A method for determining the location of a mobile station in a cellular radio communications system having a plurality of base stations, comprising receiving a signal from the mobile station at at least two base stations, obtaining measurements from the at least two base stations of the time of arrival and the direction of arrival with respect to a reference direction of the signal from the mobile station, establishing a new reference direction as a function of the location of the base stations, converting the direction of arrival information to direction of arrival information with respect to the new reference direction, and using the converted data based on the new reference direction to train the neural network and, subsequently to calculate the locations of mobile stations.

## Description

### Field of the Invention

This invention relates to position location, and more particularly to identifying the location of mobile telephone stations within a cellular radio communications system.

### Background of the Invention

The location of mobile stations within a cellular radio communications system has received considerable attention in recent years. There is the general desirability of knowing the location of mobile users in order, for example, to monitor their progress through the system and perhaps make resource allocation decisions or the like based on this information. Also, a report issued by the U.S. Federal Communications Commission in July 1996 requires that in the future all wireless service providers provide location information to emergency public safety services. Such systems must provide the position of the mobile station with an accuracy of less than 125 meters in 67% of all cases. Other promising application of mobile location information will arise with the further development of wireless services.

The location of a mobile station may be obtained with some accuracy by measuring the direction of arrival and the time of arrival of a signal from a mobile station at two or more different base stations and triangulating the resultant measurements. A problem which arises in cellular telephone and other cellular radio communications systems, however, is that the mobile stations in such systems are in a multipath environment where a signal received, for example, by a base station or other location determining station, may have traveled a circuitous route from the transmitting mobile station due to reflection of the emitted signal from buildings, trees or other structures. The multipath problem is most pronounced in urban environments where most of the communications activity occurs. Thus, received information, such as direction of arrival or time of arrival of a signal from a mobile station, may be somewhat inaccurate in terms of the actual location of the mobile, giving only an estimation of the actual location.

Even somewhat inaccurate data may be useful in determining the location of a mobile station, however. The estimation of location that can be derived from the received information can be improved by data fusion if sufficiently redundant information is available.

Artificial neural networks are particularly well suited to perform data fusion operations. In the past, attempts have been made to solve the problem of locating mobile stations using neural networks. For example, in U.S. Patent No. 5,537,511, the method proposed provides an estimate of the state of a moving target. Information is taken about the location of an observer platform at particular time intervals and information from at least one sensor about the position of the moving target relative to the observer platform at each time interval. The information is transformed into a series of geographical grids with one grid being formed for each reading of at least one sensor. Grids corresponding to similar time intervals are combined into a series of consolidated grid representations and are analyzed to produce an estimate of the state of the target at a final point in time where an observation is made.

In another patent, U.S. Patent No. 5,564,079, reference data are collected by field measurements over all relevant traffic routes with the aid of a measuring mobile station equipped with a GPS receiver. Few base stations are used. An adaptive neural network is trained with the aid of the collected reference data in order to obtain a correlation between the measured reference data and position information. Using the measurement of the Time Advance transmitted from the mobile station to a respective base station, the adaptive neural network can carry out accurate localization due to the training with reference data. The disadvantage of this process is that the neural network is different when the data come from another region.

Still another location system, that of U.S. Patent No. 5,657,487, is based upon measurable mobile data values such as those provided by mobile assisted handoff (MAHO) procedures. The signal strength measurements and the timing advance data provide information to map to an estimated vehicle position. Since the mobiles are assumed to measure signal strength discretely, there may be several consecutive positions along a road which return identical mobile data. The road is thus segmented into constant segments that are consecutively indexed, and an association is established between the associated mobile data vector and the index. The process for location of a mobile consists of first finding the road for the mobile unit, then finding the position along the road. The first step can be performed by a neural network, but one neural network is required for each road in the sector.

Generally, the neural network must learn a specific area covering all of the base station in an area. Since there may be many combinations of two or three base stations in a given network, and since the information of direction of arrival is given with respect to a fixed reference direction, there are uncountable possible configurations for the base stations used in the data fusion process. The learning of all the possible configurations and, for each base station, its environmental surroundings, requires an enormous amount of computation time and power and is therefore not realistic.

### Summary of the Invention

According to a first aspect, the present insertion consists of a method for determining the location of a mobile station in a cellular radio communications system having a plurality of base stations, the method comprising: transmitting a signal from said mobile station, receiving the signal from the mobile station at least two base stations, measuring time of arrival and direction of arrival with respect to a reference direction of the signal from the mobile station and received at said at least two base stations, establising a new reference direction as a function of the location of the base stations, converting the direction of arrival measurement to direction of arrival measurement with respect to the new reference direction, and processing the time of arrival and direction of arrival information based on the new reference direction to determine the location of the mobile station.

In a second aspect, the invention consists of apparatus comprising means for carrying out the above method.

### Brief Description of the Drawings

FIG. 1 is a representation of the location problem to be addressed by the instant invention and the development of input data for the neural network.

FIG. 2 is a block diagram showing the overall structure of the system of the instant invention.

FIG. 3 is a diagram of the neural network processor of the instant invention showing also a diagram of a typical neuron.

### Description of the Preferred Embodiment

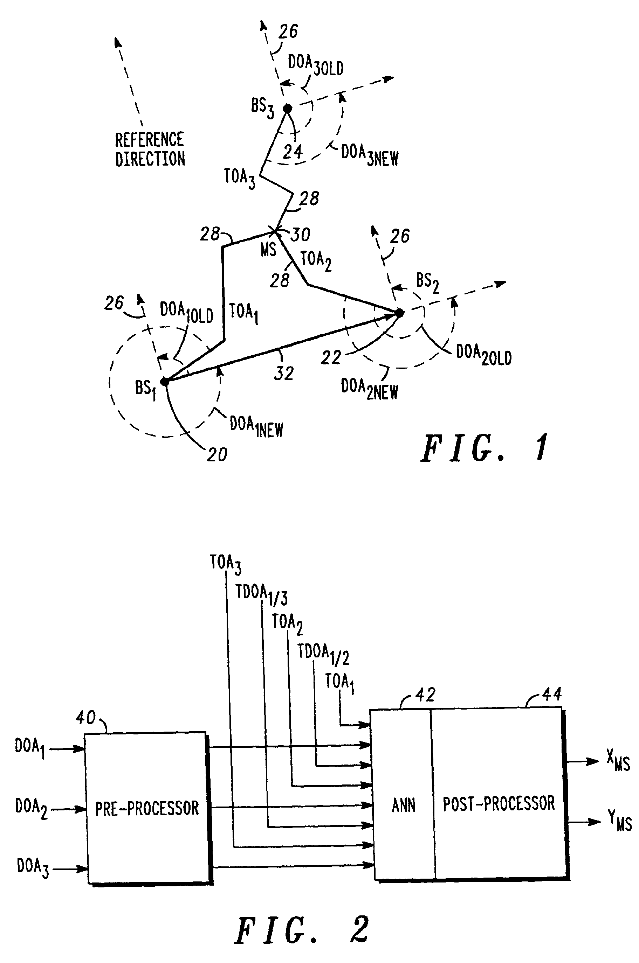

FIG. 1 is a representation of the problem of determining the location of a mobile station within a cellular telephone network. FIG. 1 shows three base stations 20, 22, and 24 of the network that, in practice, may have many more base stations covering a large geographical area. Each of the base stations has associated with it a common reference direction 26 from which reference direction the base stations make measurements of the direction of approach of a signal 28 from a mobile station 30, the location of which is desired to be known. The effects of multipath on the signal from mobile station 30 can easily be seen in that each of the signals as received by the base stations is segmented to show the reflections which may be present in an actual signal from a mobile to a base station.

At each of the base stations 22, 24, and 26 the angle from which the signal from the mobile station 30 arrives is measured with respect to the common reference direction 26. The time of arrival of the signal is also measured.

If the common reference direction were taken as an axis of a Cartesian coordinate grid overlying the entire cellular system with its many base stations, an unmanageably large number of points would necessarily have to be defined in order to locate the position of a mobile station within the system to the level of accuracy required, and a neural network to process data from any two or three base station would require excessive processing power and time to train and to solve location problems.

In the instant invention, when a signal is received from a mobile station the location of which it is desired to know, the two base stations having the highest signal strength from the mobile are selected as the primary providers of data to the neural network. Additionally, a new reference direction is established on an axis joining the two primary base stations 20 and 22. The new reference direction is shown in FIG. 1 as the line 32. A third base station 24 may also contribute data for the solution to the problem of determining the location of mobile station 30. While this example provides for direction of arrival and time of arrival of signals from three base stations, in practice a location calculation may be made with data from as few as two base stations, the minimum measurements necessary being two direction of arrival measurements, one from each station, or one direction of arrival measurement from one station and one time of arrival measurement from another station.

The data points provided by base stations 20, 22, and 24 are provided to the processor shown in FIG. 2, which comprises a Preprocessor 40, and an Artificial Neural Network (ANN) 42, which includes as an output stage a Postprocessor 44 which will be discussed later.

The ANN 42 may be a conventional Multi Layer Perceptron MLP. As will be described in greater detail later, the input layer may be made up of N vectors of three values (TOA, DOA, and TDOA) in respect of the N possible base stations providing measurements (FIG. 1 schematizes the case of three base stations, providing eight measurements). It is possible to have measurements by only two base stations. The output layer has two units corresponding to the position of the mobile station 30 in Cartesian coordinates X_{MS} and Y_{MS.}

The 3N units are divided into N parts in respect of N base stations filed as a decreasing function of their received signal strength from the mobile station 30. If the mobile signal is received by only N-i base stations, i varying from 1 to N-2 (e.g., from N-1 to 2 base stations), the inputs of the 3i last units are set to the value V₀. This value must be higher than 1 or less than -1 to saturate the input. In this manner, they are not involved in the training phase of the neural network or subsequently in the calculation of location of mobile stations in operation.

The direction of arrival (DOA) of the signal from mobile station 30 at each of the base stations 20, 22, and 24, which are noted as DOA₁, DOA₂, and DOA₃, respectively, in FIG. 1 are applied to the Preprocessor 40 where they are converted from a direction measurement relative to the standard reference direction to a direction measurement relative to the new reference direction 32.

The data points relating to time of arrival (TOA) of the signal from the mobile station 30 at each of the base stations 20, 22, and 24 (respectively TOA₁, TOA₂, and TOA₃) are applied as inputs to the neural network 42, as are the DOA outputs of Preprocessor 40. Two additional data points are used in the location process, TDOA_{1,2} and TDOA_{1,3} which are, respectively, the differences between TOA₁ and TOA₂, and TOA₁ and TOA₃.

The ANN 42 and its associated Postprocessor 44 produce output signals X_{MS} and Y_{MS} which are the Cartesian coordinates of the location of mobile station 30 on a grid, in a preferred embodiment, where the x-axis is the new reference direction, the y-axis is perpendicular to the x-axis and the origin of the grid is base station 20, the base station receiving the highest signal strength from the mobile station. The output could be chosen to be resolved to a grid with other x- and y-axis positions and a different origin (for example, the output could be translated onto a grid for the entire cellular system), or, indeed expressed in polar coordinates or another locating format. These translations, including the one of the preferred embodiment, may be performed by Postprocessor 44.

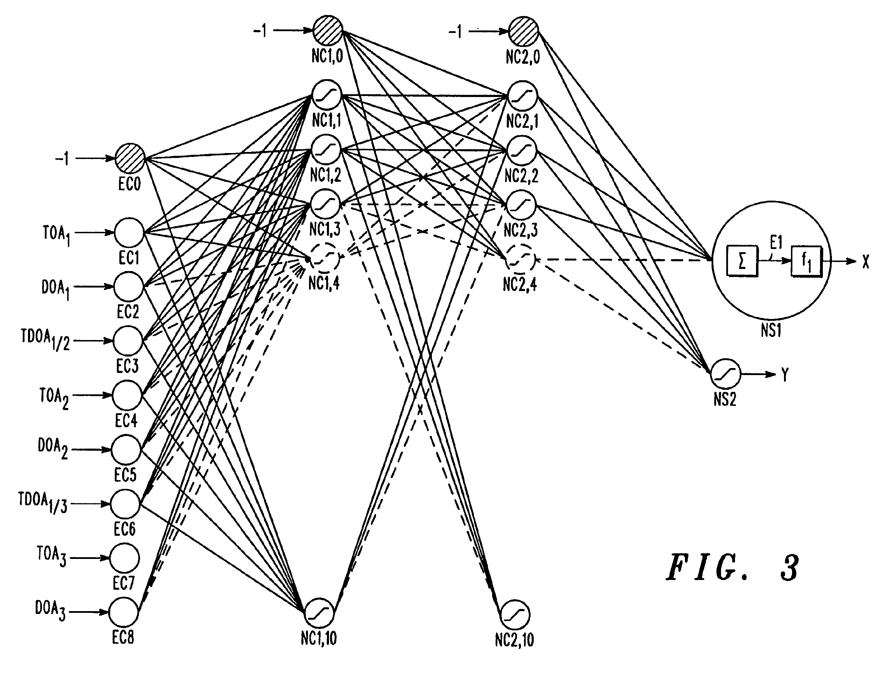

The neural network ANN 42 is shown in more detail in FIG. 3. It is a feedforward network comprising four layers of neurons. Assuming a maximum possibility of three base stations, the structure of the network is as shown, having an input layer formed by nine cells which include a first neural cell EC0 for inputting a threshold of -1, and eight neural cells (EC1-EC8) for inputting the measurements of TOA, DOA, and TDOA. There are two hidden layers of eleven neural cells each. The first hidden layer has a hidden neural cell NC1,0 for inputting a threshold values selected to be -1, and ten hidden neural cells denoted as NC1,1 to NC1,10. The second hidden layer likewise layer has a hidden neural cell NC2,0 for inputting a threshold values selected to be -1, and ten hidden neural cells denoted as NC2,1 to NC2,10. The network 42 also has an output layer with two neural cells denoted in FIG. 3 as NS1 and NS2.

As previously noted, and as can be seen in FIG. 3, the data points relating to time of arrival (TOA) of the signal from the mobile station 30 at each of the base stations 20, 22, and 24 (respectively TOA₁, TOA₂, and TOA₃) are applied as inputs to the input layer of the neural network 42, as are the DOA outputs of Preprocessor 40, the latter having been modified by the Preprocessor 40 to be directions relative to the new reference direction as shown in FIG. 1. Two additional data points are used in the location process, TDOA₂ and TDOA₃ which are, respectively, the differences between TOA₁ and TOA₂, and TOA₁ and TOA₃.

The system operates in two modes: a definition, or training, mode, and a fuser mode.

The definition mode or phase occurs during the conception of the localization system. It consists of the training of the neural network in order to define the various elements of the ANN 42, including the synaptic weights and the threshold for each neuron. This phase, which can potentially use a large amount of computing power and time, is usually done by the manufacturer or integrator of the system.

In operation, inputs are applied as shown in FIG. 3 from the base station measurements and as the DOA measurements are modified by the Preprocessor 40. Thus in FIG. 3, a threshold of-1 is applied to input neuron EC0, and inputs from the base station measurements are applied to input neurons EC1 to EC8. These eight inputs constitute the TOA, DOA, and TDOA measurements of base stations 20, 22, and 24. The inputs in the preferred embodiment are chosen to vary between -1 and 1 to avoid saturating the nodes while providing a representation of the particular measurement. If data from fewer than three base stations is applied to the network, the values on the nodes for those stations missing information are set at less than -1 or more than 1 to saturate their respective input nodes and thereby not affecting the measurements based on the signals received by the others with the strongest measurements.

Each neuron in the first set of hidden neurons (except neuron NC1,0, which is set at a threshold level of -1) receives as an input the input measurements applied to each of the input neurons with eight input weights, or synaptic coefficients, of each of the input neurons. Likewise each neuron in the second set of hidden neurons (except neuron NC2,0, which is set at a threshold level of -1) receives as an input the inputs to the first set of hidden neurons with ten synaptic coefficients of each of the first set of hidden neurons. Finally, each of the two output neurons receives as inputs the inputs of each of the neurons of the second hidden set of neurons with the ten synaptic coefficients of each of the second set of hidden neurons.

The structure of each neuron also is illustrated in FIG. 3. The particular neuron shown is the x output neuron NS1, but the function is similar in all the neurons of the network. Each neuron receives the inputs as described above. Each neuron produces a weighted sum denoted Σ of inputs and calculates an output signal Ei. The neuron then transfers this intermediate output signal via an activation function denoted f1 and calculates an output signal Si in accordance with the relationship: Si=f1(Ei). In the case of this particular output neuron, the output is indicated as x. The activation function is preferably a sigmoidal function "tanh", equal to the hyperbolic tangent function.

In training the neural network a reasonably large set of data and the proper solution are applied to the network and, by use of a retropropagation algorithm the weights at each node are modified such that the network is forced to the proper result. This establishes the algorithm which will be used in the location phase of operation of the neural network. For example, 2500 or more sets of data and their solutions may be used in the training sequence. The establishment of a new reference direction based upon the two base stations receiving the strongest signal from the mobile station and the transformation of the Direction of Arrival signals to the new reference direction generalizes the learning sequence of the network in order to locate the mobile station in any configuration of base stations. Since the new reference direction is always based on the direction between the two base stations receiving the strongest signals from the mobile station whose location is to be determined, the learning sequence for any two station pair is very similar.

In the use of the ANN 42 as a data fuser, the algorithm as developed in the training phase is fixed and requires a low degree of complexity so location estimates are made rapidly. Once the network is trained, the application of real data will produce accurate estimates of the location of mobile stations in the network. Compared to " geometric" solutions where an attempt is made to map an entire cellular system, the ability to generalize the solution of the problem by transforming the directional data to a new reference allows the instant system to have a very low complexity after the learning sequence.

While the invention has been described in terms of system utilizing more than two base stations for production of data for the location of mobile stations, and in terms of a neural network designed to accommodate signals from the three strongest signals received from the mobile station, it is understood that a system could have as few as two base stations to operate in substantially the same way, or more than three. And while a particular type of neural network has been disclosed, it is understood that other data fusion techniques may also be applied to the solution of the mobile station location problem in a substantially similar way.

## Claims

1. A method for determining the location of a mobile station (30) in a cellular radio communications system having a plurality of base stations, (22, 24, 26) comprising:
transmitting a signal from said mobile station, receiving the signal from the mobile station at at least two base stations,
measuring time of arrival and direction of arrival with respect to a reference direction of the signal from the mobile station and received at said at least two base stations,
establishing a new reference direction as a function of the location of the base stations,
converting the direction of arrival measurement to direction of arrival measurement with respect to the new reference direction, and
processing the time of arrival and direction of arrival information based on the new reference direction to determine the location of the mobile station.

2. A method as set forth in claim 1 wherein direction of arrival information is obtained from one of the at least two base stations and time of arrival is obtained from another of the at least two base stations.

3. A method as set forth in claim 2 wherein direction of arrival information is obtained from at least two of the at least two base stations.

4. A method as set forth in claim 3 wherein time of arrival information is obtained from at least two of the at least two base stations.

5. A method as set forth in claim 4 wherein time of arrival information from the at least two base stations is combined to produce a time difference of arrival of the signal at the at least two base stations.

6. A method as set forth in claim 3 wherein there are more than two base stations and the new reference direction is established as a function of the location of the two base stations receiving the strongest signals from the mobile station.

7. A method as set forth in claim 6 wherein the location of the mobile station is determined with respect to a coordinate system based on the two base stations receiving the strongest signals from the mobile station.

8. A method in accordance with claim 7 wherein the origin of the coordinate system is the base station receiving the strongest signal from the mobile station.

9. Apparatus for determining the location of a mobile station (30) in a cellular radio communications system having a plurality of base stations, (22, 24, 26) comprising:
means (30) for transmitting a signal from said mobile station, means (22, 24, 26) receiving the signal from the mobile station at at least two base stations,
means (22, 24, 26) for measuring time of arrival and direction of arrival with respect to a reference direction of the signal from the mobile station and received at said at least two base stations,
means (40) for establishing a new reference direction as a function of the location of the base stations,
means (40) for converting the direction of arrival measurement to direction of arrival measurement with respect to the new reference direction, and
means (42, 44) for processing the time of arrival and direction of arrival information based on the new reference direction to determine the location of the mobile station.
